# EUROPEAN PATENT APPLICATION

(11) **EP 2 515 164 A1**
(43) Date of publication of application: **24.10.2012**
(21) Application number: 09852328.5
(22) Date of filing: 16.12.2009
(51) Int. Cl.: G02F 1/137, G02F 1/1343, G02F 1/1337

(54) **LCD LIGHT-REDUCING APPARATUS, AND VEHICLE SMART MIRROR USING SAME**

(71) Applicant: Sody Co., Ltd., Buk-gu, Gwangju 500-470 (KR)
(72) Inventor: LEE, Jong-Cheon, Gwangju 506-820 (KR)
(74) Representative: Chaillot, Geneviève
(86) International application number: PCT/KR2009/007522
(87) International publication number: WO 2011/074719

(57) **Abstract**

The present invention relates to an LCD light-reducing apparatus, and to a vehicle smart mirror using the same, which are to be applied to the interior rear-view mirror or exterior side-view mirrors of a vehicle to protect the vision of the driver of the vehicle from bright lights or glares coming from behind him during nighttime drive. The LCD light-reducing apparatus according to the present invention comprises an LCD panel including at least one liquid crystal cell, and a power supply device for supplying a sufficient electric field to the LCD panel. The LCD cell includes a liquid crystal layer; and two substrate layers opposite one another with the liquid crystal layer at center thereof. The liquid crystal layer is filled with a compound including negative dielectric anisotropic nematic liquid crystals, a chiral material for inducing a cholesteric phase of the nematic liquid crystals to have a pitch of 1 to 4 times the cell gap of the liquid crystal layer, and dichromic dyes for being rearranged parallel to the nematic liquid crystals to transmit or absorb light in accordance with whether the electric field is applied or not. The substrate layer includes a tilted homeotropic alignment layer for arranging the respective nematic liquid crystals and dichromatic dyes in a first arrangement that is vertically aligned to the surface of the substrate layer, and an electrode for generating a sufficient electric field that passes through the liquid crystal layer to rearrange the nematic liquid crystals and dichromatic dyes in a second arrangement that is different from the first arrangement.

## Description

### Technical Field

The present invention relates to an LCD (Light Crystal Display) light-reducing apparatus for use in a vehicle smart mirror, and more particularly to an LCD light-reducing apparatus and a vehicle smart mirror using the same, which may be applied to an interior rear view mirror or exterior side view mirrors of vehicles in order to prevent glare and protect the vision of a driver from bright light emitted from behind during nighttime driving.

### Background Art

Typically a light-reducing apparatus is variously applied to ski goggles, sunglasses, vehicle smart mirrors for protecting the driver of a vehicle from glare, and windows for modulating light transmittance. In the case of sunglasses or ski goggles, the light-reducing apparatus is mainly manufactured using photo-chromic materials. Although these photo-chromic materials are advantageous because of their simple application, their response times are too slow to apply it to the vehicle smart mirrors. On the other hand, a light-reducing apparatus for a vehicle smart mirror is mainly achieved by using an ECM (Electro Chromic Material) technique. However, such an ECM technique suffers from a comparatively slow response time in the range of ones to tens of seconds, making it unsuitable to apply it to the exterior smart mirrors for vehicles, etc.

In order to improve the response time, a light-reducing apparatus using an LCD was proposed, and representative patents thereof include U.S. Pat. Nos. 4,272,162; 4,278,328; 4,357,374; 4,676,601; 4,696,548; 4,729,638; 4,848,878; 5,015,086; 6,239,778; 6,759,945 and Korean Pat. No. 10-0646444.

U.S. Pat. No. 5,015,086 and Korean Pat. No. 10-0646444 relate to a light-reducing apparatus using LCD modes including polarizing films. However, when the polarizing films are used, a light transmittance depends on the azimuth angle of the polarization direction of incident light, and the light transmittance or a light reflectance may decrease undesirably due to the polarizer. The maximum transmittance of the technique disclosed in U.S. Pat. No. 5,015,086 is about 35%, and the maximum transmittance of the technique disclosed in Korean Pat. No. 10-0646444 is about 44%.

U.S. Pat. Nos. 4,272,162 and 4,278,328 disclose a technique for adjusting light transmittance by adding a dichroic dye to nematic liquid crystals (NLC) having positive dielectric anisotropy. In a light-reducing apparatus that uses this technique, since the light transmittance of the electric field OFF-state is lower than that of the ON-state, the light transmittance goes into low and maintains a dark state when the applied electric power is disconnected abruptly. Hence, in the application of a vehicle smart mirror, the LCD mirror should be darken in an emergency of the electric power off, thus interfere the safe operation of a driver, consequently violate the international safety regulations for vehicle mirrors.

U.S. Pat. No. 6,239,778 discloses a transmissive light-reducing apparatus using a guest-host LCD which is composed of a liquid crystal layer made of a mixture comprising negative dielectric anisotropic nematic liquid crystals and small amount of dichroic dyes between two substrates coated with a homeotropic alignment layer. When a sufficient voltage is applied to the liquid crystal layer, the liquid crystals and dichroic dye molecules are arranged anisotropically on the plane parallel to the substrates so that the pitch of the cholesteric phase is at least four times the thickness of liquid crystal layer. When a polarized light is incident on the anisotropically aligned liquid crystal layer, the light transmittance varies depending on the polarization direction thereof. Wherein the pitch of the cholesteric phase is at least four times the thickness of the liquid crystal layer as mentioned above, the liquid crystal molecules have a structure that is twisted by 90° at a maximum on the plane parallel to the substrates. Since the dichroic dye molecules which absorb lights are aligned parallel to the liquid crystal molecules, thus affording a structure that is twisted by 90° on the plane of the substrates; the most of the dichroic dye molecules are arranged only within the range of 180° azimuth angles. The light in the polarization direction parallel to the liquid crystal molecules is absorbed well, whereas it is difficult to absorb light in the polarization direction perpendicular to the liquid crystal molecules. Consequently the absorption of incident light which is isotropically polarized cannot be maximized by using the same molecular-weight dyes due to its anisotropic arrangement in azimuth.

U.S. Pat. No. 6,621,550 discloses a reflective LCD structure in which nematic liquid crystals having negative dielectric anisotropy contains small amount of dichroic dyes and are injected into the vertically aligned cells. In order to improve the absorption of incident light by the dichroic dyes aligned in parallel, a 1/4 wavelength film is formed between a reflective plate and a liquid crystal layer in the liquid crystal cells so that the polarization direction of the incident light is rotated by 90° when the light passes twice through the quarter wavelength film. However, the formation of the 1/4 wavelength polymeric liquid crystal film in the cells requires more complicated processes, and the light absorption depends on the azimuth angle of the polarization direction of the incident light.

### Disclosure

### Technical Problem

In consideration of the problems encountered in the related art, an object of the present invention is to provide an LCD light-reducing apparatus which exhibits a fast response time to change in transmittance or reflectance, without depending on the polarization direction of incident light, and which has low power consumption.

Another object of the present invention is to provide a vehicle smart mirror using the LCD light-reducing apparatus.

### Technical Solution

In order to achieve the above objects, the present invention provides an LCD light-reducing apparatus, comprising: an LCD panel including at least one liquid crystal cell; and a power supply unit for applying an electric field to the LCD panel; wherein the liquid crystal cell includes two substrate layers and a liquid crystal layer located between the two substrates;
wherein the liquid crystal layer is filled with a mixture comprising nematic liquid crystals having negative dielectric anisotropy, a chiral material for inducing a cholesteric phase of the nematic liquid crystals to have a pitch that is 1 to 4 times the cell gap of the liquid crystal layer, and a dichroic dye; wherein the liquid crystal layer is filled with a mixture comprising nematic liquid crystals having negative dielectric anisotropy, a chiral material for inducing a cholesteric phase of the nematic liquid crystals to have a pitch that is 1 to 4 times a cell gap of the liquid crystal layer, and dichroic dyes where the dye is rearranged parallel to the nematic liquid crystals to transmit or absorb light depending on whether a sufficient electrical field is being applied or not; wherein the substrate layers each comprise a tilted-homeotropic alignment layer for aligning the nematic liquid crystals and the dichroic dye in the first arrangement vertical to a plane of the substrate layer, and an electrode for generating an electric field that passes through the liquid crystal layer to rearrange the nematic liquid crystals and the dichroic dyes in the second arrangement that is different from the first arrangement.

In addition, the present invention provides a vehicle smart mirror, comprising: an LCD panel including at least one liquid crystal cell; a power supply unit for applying an electric field to the LCD panel; an incident light sensing unit for detecting peripheral brightness; and an operating determination unit for controlling the power supply unit to operate the LCD panel depending on the peripheral brightness detected by the incident light sensing unit; wherein said liquid crystal cell includes two substrate layers and a liquid crystal layer located between the two substrate layers; wherein the liquid crystal layer is filled with a mixture comprising nematic liquid crystals having negative dielectric anisotropy, a chiral material for inducing a cholesteric phase of the nematic liquid crystals to have a pitch that is 1 to 4 times a cell gap of the liquid crystal layer, and dichroic dyes where the dye is rearranged parallel to the nematic liquid crystals to transmit or absorb light depending on whether a sufficient electrical field is being applied or not; wherein the substrate layers each include a tilted-homeotropic alignment layer for aligning the nematic liquid crystals and the dichroic dyes in the first arrangement vertical to the plane of the substrate layer, and an electrode for generating an electric field that passes through the liquid crystal layer to rearrange the nematic liquid crystals and the dichroic dyes in the second arrangement that is different from the first arrangement.

### Advantageous Effects

According to the present invention, the following effects are expected apparently.

First, a light-reducing apparatus which is able to modulate light transmittance or light reflectance using an LCD panel without any polarizing film can be provided.

Second, a light-reducing apparatus which is able to uniformly modulate both polarized light and non-polarized light can be provided.

Third, because the power consumption of the LCD panel is low, a power saved light-reducing apparatus can be provided.

Fourth, light transmittance or light reflectance and the response time thereof can be arbitrarily controlled depending on changes in peripheral brightness using the grey scales and the fast response times of the LCD.

Fifth, even when the electric power is disconnected abruptly, the light transmittance or the light reflectance of the light-reducing apparatus can be maintained in bright state.

Sixth, in the visible light wavelength range, the spectrum of the light transmittance or the light reflectance can be arbitrarily selected depending on the properties of the dichroic dyes used.

Seventh, the glass or the plastic plates having a flat or curved surface can be used as the LCD substrates.

### Description of Drawings

FIGS. 1 and 2 relate to a transmissive LCD light-reducing apparatus according to a first embodiment of the present invention, FIG. 1 showing the case when a sufficient electric power is not supplied across the LC layer and FIG. 2 showing the case when a sufficient electric power is supplied;
FIG. 3 relates to an LCD panel of an LCD light-reducing apparatus according to another embodiment of the present invention;
FIG. 4 relates to an LCD panel of an LCD light-reducing apparatus according to a further embodiment of the present invention; and
FIG. 5 relates to an LCD panel of an LCD light-reducing apparatus according to a still further embodiment of the present invention.

### Best Mode

The present invention relates to a transmissive or reflective light-reducing apparatus using an LCD containing a mixture of negative dielectric anisotropic nematic liquid crystals, a dichroic dye and a chiral material.

More specifically, the LCD light-reducing apparatus according to the present invention includes one or more liquid crystal cells and a power supply unit for applying electric fields to the liquid crystal cells. The individual liquid crystal cells include two substrate layers and a liquid crystal layer inserted therein. Each liquid crystal layer includes transparent negative dielectric anisotropic nematic liquid crystals which may be rearranged depending on the magnitude of the electric field, positive dichroic dyes which are mixed with the nematic liquid crystals to absorb light of predetermined wavelengths, and a chiral material which induces the nematic liquid crystals to a twisted structure.

By applying a sufficient voltage using a power supply, the transparent nematic liquid crystals of the liquid crystal layer may be rearranged on the plane parallel to the substrate, and also the dichroic dye molecules may be rearranged isotropically along by the liquid crystal molecules. The dichroic dye molecules may absorb light of different wavelengths depending on the state of arrangement thereof, and a light-reducing function can be achieved due to such dichroic dye molecules even without any polarizing film.

### Mode for Invention

A preferred embodiment of the present invention, of an LCD light-reducing apparatus and a vehicle smart mirror using the same, is described below with reference to the drawings.

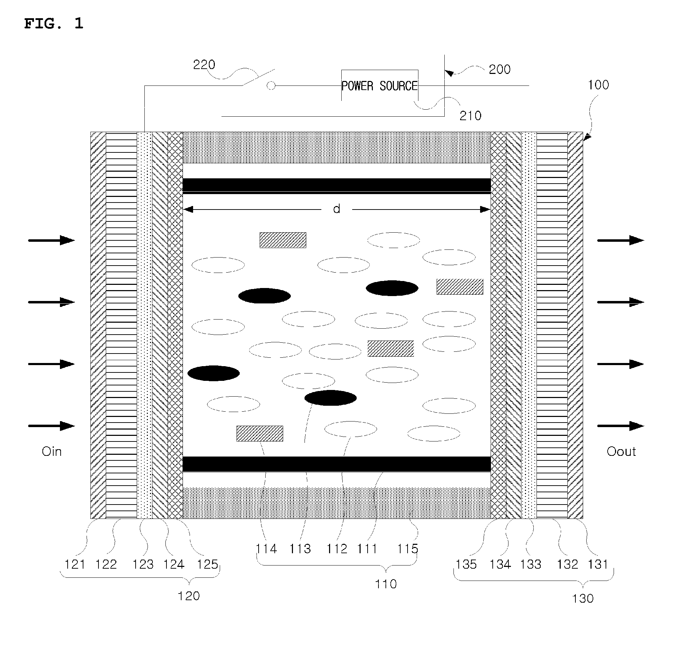

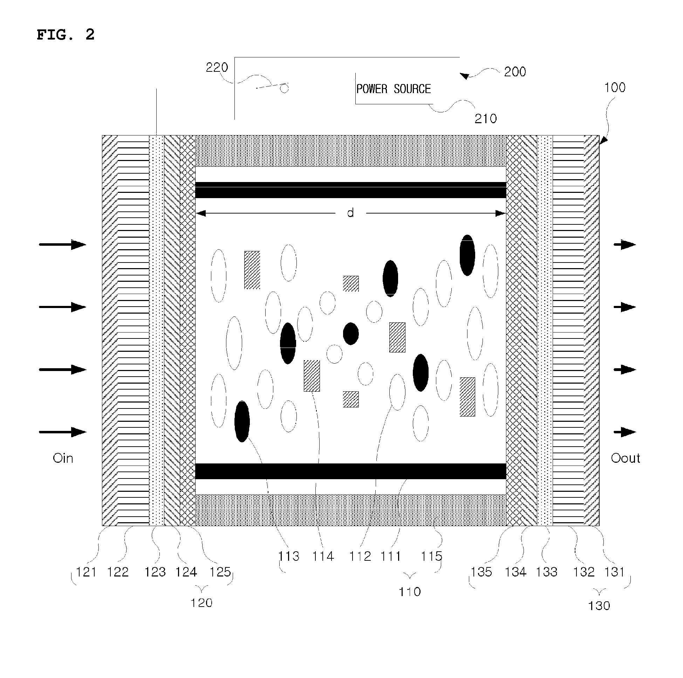

FIGS. 1 and 2 show a transmissive LCD light-reducing apparatus according to a first embodiment of the present invention, wherein FIG. 1 shows the case where power is not supplied, and FIG. 2 shows the case where it is supplied.

The LCD light-reducing apparatus according to the present invention includes a guest-host LCD panel having one or more liquid crystal cells **100** and a power supply unit **200** for applying an electric field to respective liquid crystal cells **100** of the LCD panel. The liquid crystal cells **100** each include a liquid crystal layer **110** and two substrate layers **120** and **130** which are faced on both outer surfaces of the liquid crystal layer **110.**

The liquid crystal layer **110** includes spacers **111** which maintain the gap between the two substrate layers **120** and **130,** and is filled with a mixture comprising transparent negative dielectric anisotropic nematic liquid crystals **112** which may be rearranged depending on the magnitude of the electric field, a positive dichroic dye **113** which is admixed in the nematic liquid crystals **112** to absorb light of predetermined wavelengths, and a chiral material **114** which induces the nematic liquid crystals **112** to a twisted structure. Also, the liquid crystal layer **110** is sealed with a sealant **115.** As such, positive anisotropy implies a property of absorbing visible light which oscillates along the long axis of the dye molecules.

Respective substrate layers **120** and **130** include anti-reflective layers **121** and **131,** transparent substrates **122** and **132,** transparent electrode layers **123** and **133,** transparent protective layers **124** and **134,** and liquid crystal alignment layers **125** and **135,** which are sequentially positioned inwards, and the liquid crystal layer **110** is formed between the two liquid crystal alignment layers **125** and **135.**

The anti-reflective layers **121** and **131** are positioned on the outermost surfaces of the LCD panel so as to minimize the reflectance of light which is incident on or passes through the interface between the transparent substrates **122** or **132** and air, and are typically designed to have a reflectance of 1% or less in the visible light range.

The transparent substrates **122** and **132** are made of glass or a plastic material, and are provided in the form of a plane or curved surfaces. In the case of the substrate made of a plastic material having high flexibility, it may be attached to glass which is flat and transparent so that the flatness or curvature thereof can be kept uniform.

The transparent electrode layers **123** and **133** are typically provided in the form of an ITO (Indium Tin Oxide) thin film having a thickness of 300 nm or less, and may be formed by coating the corresponding material to a thickness of about 1500 Å on the transparent substrates **122** and **132,** or by coating a metal to a thickness of 100 nm or less. However, the case a metal is coated undesirably results in a significant loss of light transmittance.

The transparent passivation layers **124** and **134** of a silicon nitride thin film or a silicon oxide thin film isolate the liquid crystal layer **110** from the various impurities of the transparent substrates **122** and **132** or the transparent electrode layers **123** and **133.**

The liquid crystal alignment layers **125** and **135** enable the nematic liquid crystal molecules **112** of the liquid crystal layer **110** to be aligned vertically to the plane of the substrate layers. Generally, the liquid crystal molecules are aligned at an angle of 80 - 90° respect to the substrate. A vertically aligning agent having such a function includes a silane surfactant or polyimide (PI), and rubbing is performed using a soft cloth to obtain a tilted homeotropic alignment.

The spacers **111** make the gap between the two substrate layers **120** and **130** constant. Even when the two substrate layers **120** and **130** are curved, the thickness of the liquid crystal layer **110,** namely the cell gap d, is maintained constant. The spacers **111** may be formed by glass beads or micro-pearl rods, or by forming barriers or columns using PI on the substrate layers **120** and **130.**

The cell gap d of the liquid crystal layer **110** is maintained by the spacers **111** and is filled with a mixture comprising the nematic liquid crystals **112,** the dichroic dye **113,** and the chiral material **114.**

The cell gap d of the liquid crystal layer **110** amounts to ones of *µ*m ~ tens of *µ*m, and is formed in a VA (Vertically Aligned) mode. The liquid crystal molecules **112** are vertically aligned at 80 - 90° respect to the plane of the substrate because of the liquid crystal alignment layers **125** and **135.** Such a state of tilted homeotropic alignment extends up to the whole inside of the cells because of the elastic interactions between the liquid crystal molecules, thereby forming an induced nematic phase over the entire liquid crystal layer **110.**

As disclosed in G. W. Gray and D. G. McDonnell, Mol. Cryst. Liq. Cryst., 37, 189, 1976, when a small amount of chiral material **114** is added to nematic liquid crystals as in the present invention, the liquid crystal molecules are induced in a twisted arrangement, resulting in a cholesteric phase. In the present invention, the chiral material is added to the nematic liquid crystals so as to induce the cholesteric phase the pitch of which is 1 - 4 times the cell gap of the liquid crystal layer due to the twisting power of the chiral material on the nematic liquid crystals.

The cholesteric phase has a helical structure and the pitch *P₀* of which is proportional to the reciprocal of the weight percentage of the chiral material thus may be adjusted precisely. The pitch *P₀* is a pitch of a cholesteric phase of liquid crystals in a bulk state not subject to external impacts, and is greatly affected by the liquid crystal alignment layers of the liquid crystal cells in thin layer structure as in the present invention. Specifically, in the vertically aligned thin cells as in the present invention, the vertical alignment force of the liquid crystal alignment layers converts the helical structure of the cholesteric phase into an induced nematic phase. As the cell gap d decreases and the pitch *P₀* of the cholesteric phase increases, the induced nematic phase is well aligned.

The limitation in which the cholesteric phase has the induced nematic phase due to only the vertical alignment force of the thin film greatly depends on the physical properties of the liquid crystals themselves. P. R. Gerber (Z. Naturforsch., 36A, 718, 1981) reported *(P₀*/*d)* = 0.98, while Jong-cheon Lee (PhD thesis, Kent State University, 1990), who is the inventor of the present invention, reported *(d*/*P₀) =* 0.74. In the above two cases the cell gap d is greater than *P₀*/*2,* and it implies that when the 180° twisted cholesteric liquid crystal phase or the cholesteric liquid crystal phase having a thickness of *P₀*/*2* is located between the two tilted-homeotropic alignment substrates, it may be maintained in the texture of the induced nematic liquid crystal phase safely. In the present invention, the chiral material **114** is mixed so that the pitch *P₀* of the cholesteric phase of the nematic liquid crystals is 2d, thereby imparting the nematic liquid crystal molecules with the helical structure twisted by about 180° between the two substrates.

Because the shape of the dichroic dye **113** is elongate similar to that of the nematic liquid crystal molecules, the nematic liquid crystal molecules and the dichroic dye molecules mix well with each other. Typical examples of the dichroic dye include azo base dyes G165, G205, G232, and G239, anthraquinone dyes, etc., available from Mitsui Chemical Co. The dichroic dye molecules strongly absorb lights of a specific wavelength in the visible light range thus representing a specific color. Thus, when a several dichroic dyes having complementary colors are mixed, it is easy to get a black dye mixture which has a relatively uniform light absorption in the visible light range.

The liquid crystal layer of the present invention is formed by mixing 90 ~ 98 weight percentage of the nematic liquid crystals having negative dielectric anisotropy, 1 ~ 5wt% of the dichroic dye, and 0.1 ~ 5wt% of the chiral material. The mixture comprising the nematic liquid crystals and the dichroic dye, which constitutes the liquid crystal layer, is aligned in an induced nematic liquid crystal phase because of the liquid crystal alignment layers when a sufficient electric field is not applied from the outside, whereas it is aligned in a cholesteric liquid crystal phase when a sufficient electric field is applied from the outside.

The sealant **115** plays a role in protecting the liquid crystal mixture charged in the liquid crystal layer **110** from external air or impurities and in defining the area of the liquid crystal layer **110.**

The power supply unit **200** includes a power source **210** connected with the transparent electrodes layers **123** and **133** of the two substrate layers **120** and **130,** and a switch **220** which switches the power source **210** with the transparent electrode layers **123** and **133.**

With reference to **FIG. 1****,** the operation of the LCD light-reducing apparatus according to the present invention when the switch of the power supply unit is turned off so that no power is supplied to the LCD panel is described below.

When a sufficient electric power is not supplied to the LCD panel from the power supply unit **200,** the nematic liquid crystal molecules are vertically aligned by the liquid crystal alignment layers **125** and **135,** and are thus arranged in a direction vertical to the plane of the substrate and the dichroic dye molecules are also arranged in a direction vertical to the plane of the substrate.

As such, incident light (Oin) travels along the long axis of the dichroic dye molecules of the liquid crystal layer, and the vibration direction of light is orthogonal to the long axis of the dye molecules, thus minimizing the absorption of light, whereby light (Oout) emitted through the liquid crystal layer is maximized, resulting in a bright state. The light transmittance of the LCD light-reducing apparatus according to the experiment of the present invention can be up to 60 ~ 70%.

With reference to **FIG. 2****,** the operation of the LCD light-reducing apparatus according to the present invention when the switch of the electric power supply unit is turned on to supply power to the LCD panel is described below.

When a sufficient potential difference equal to or higher than the threshold voltage is applied across the two transparent electrode layers **123** and **133** of the two substrate layers **120** and **130,** then a sufficient electric field is formed in the liquid crystal layer **110** so that the nematic liquid crystal molecules having negative dielectric anisotropy are rearranged by themselves in a direction parallel to the plane of the substrate.

The nematic liquid crystal molecules are mixed with a specific amount of the chiral material **114** so that the pitch *P₀* of the cholesteric phase is 2d and the nematic liquid crystal molecules have a helical arrangement twisted by about 180° between the two substrate layers. Specifically, the liquid crystal molecules which approach one substrate layer are aligned along one direction of the first substrate while being parallel to the plane of the substrate; the liquid crystal molecules which are twisted helically and positioned at the medium of the liquid crystal layer are arranged vertically to the direction of the substrate by rotation by 90° while being parallel to the plane of the substrate; and the liquid crystal molecules as approaching to the other substrate layer are rotated by 180° to align themselves again along the anti-parallel to the direction of the first substrate.

That is to say; the nematic liquid crystal molecules **112** are arranged in a helical structure rotated by 180° corresponding to the 1/2 pitch of the cholesteric phase over the entire liquid crystal layer **110;** the positive dichroic dye molecules **113** are aligned parallel to the nematic liquid crystal molecules **112;** and thus the elongated-shape nematic liquid crystal molecules and dichroic dye molecules are uniformly arranged through the whole 360° azimuth angle on the plane parallel to the substrate due to the symmetry of the heads and the tails thereof. Accordingly, the intensity of the light that passes therethrough is uniform regardless of the polarization direction of incident light (Oin). Moreover, as incident light (Oin) travels in a direction orthogonal to the dichroic dye molecules, the light absorption has a maximum, whereas the transmitted light (Oout) has a minimum value.

As described above, when an electric field is applied to the liquid crystal layer so that the nematic liquid crystals and the dichroic dyes are in the cholesteric phase, the light of the full azimuth angle is uniformly absorbed regardless of the polarization of the light, thus exhibiting uniform reflectance (or absorption).

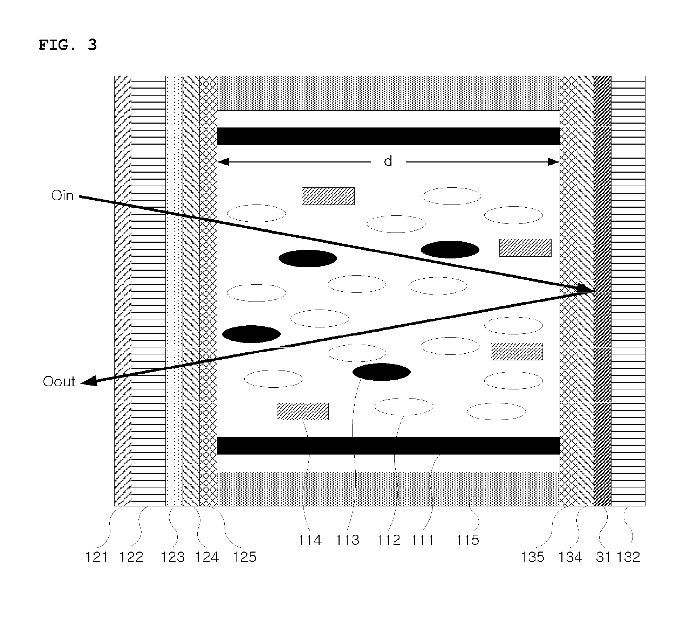

**FIG. 3** relates to an LCD panel of an LCD light-reducing apparatus according to another embodiment of the present invention. The LCD light-reducing apparatus of **FIG. 3** has a reflective structure; wherein an opaque metal film **31** is coated on the substrate **132** instead of the transparent electrode layer **133** of one substrate layer in the LCD light-reducing apparatus of **FIGS. 1** and **2****;** thus said opaque metal film acts as an electrode necessary for operating the LCD and a light reflective plate simultaneously; and the antireflection layer of the substrate layer is not necessary.

The opaque metal film **31** may be made of any one selected from among aluminum, chromium and silver, and the light reflectance of the opaque metal film **31** is 50 ~ 99%. The opaque metal film **31** is protected in a liquid crystal process by the passivation layer **134,** which isolates the liquid crystal layer **110** from various impurities of the other layers. The substrate **132** may be made of glass or plastic, and may be easily applied to a plane or a curved surface respectively.

An incident light (Oin) passes through the liquid crystal layer **110** of the LCD panel and is reflected from the metal film **31** and goes back through the liquid crystal layer **110** again, and then comes out to the outside. Since such a reflective light-reducing apparatus doubles up its optical path length, compared with the transmissive light-reducing apparatus of **FIGS. 1** and **2****,** the intensity of light emitted from the reflective light-reducing apparatus is minimized further by using the same geometry, the reflective light-reducing apparatus may be applied to anti-glare mirrors for vehicles.

The operation of the liquid crystal layer, when a sufficient electric power is supplied to the LCD panel and when it is not, is the same as that of the LCD panel of the transmissive light-reducing apparatus illustrated in **FIGS. 1** and **2****.**

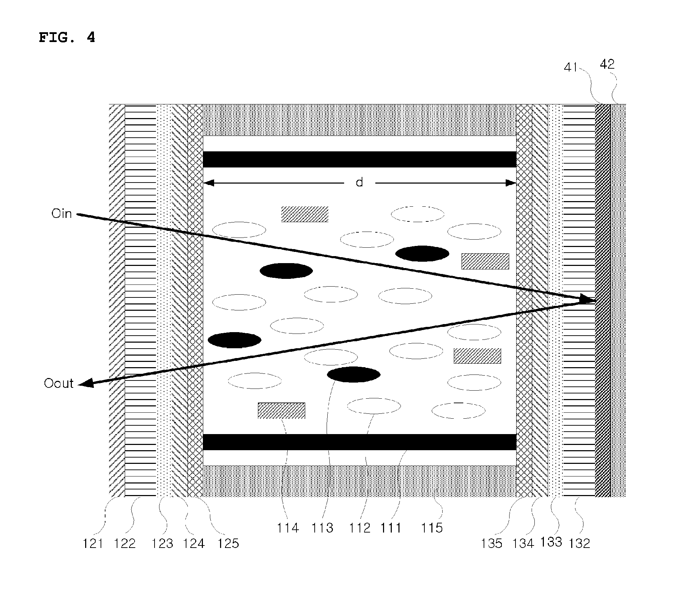

**FIG. 4** relates to an LCD panel of an LCD light-reducing apparatus according to a further embodiment of the present invention.

A metal reflective layer **41** and a metal passivation layer **42** are further deposited on the outer surface of the transparent substrate **132** of one substrate layer of the transmissive light-reducing apparatus of **FIGS. 1** and **2****,** and the anti-reflective layer is omitted. The metal reflective layer **41** functions to reflect incident light, and the metal passivation layer **42** functions to prevent contamination of the metal reflective layer **41.** The substrate **132** may be made of glass or plastic, and may be easily applied to a plane or a curved surface respectively. The metal reflective layer is made of any one selected from among aluminum, chromium and silver.

The operation of the liquid crystal layer, when a sufficient electric power is supplied to the LCD panel and when it is not, is the same as that of the LCD panel of the transmissive light-reducing apparatus illustrated in **FIGS. 1** and **2****.**

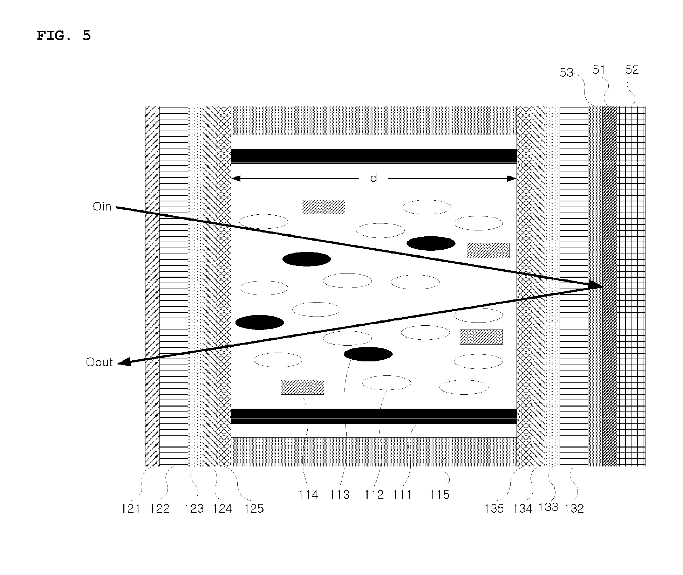

**FIG. 5** relates to an LCD panel of an LCD light-reducing apparatus according to a still further embodiment of the present invention.

The anti-reflective layer of one substrate layer of the transmissive light-reducing apparatus of **FIGS. 1** and **2** is omitted, and a substrate **52** (having a mirror function) coated with a reflective layer **51** is adhered onto the outer surface of the transparent substrate **132** using a transparent curing agent. This transparent curing agent includes a transparent thermoset resin or UV curing resin, and is used to form a curing layer **53** between the transparent substrate **132** and the reflective layer **51.** The curing layer ***53** has a refractive index in the range of 1.4 ~ 1.55 in the visible light wavelength range, which is similar to the refractive index of the transparent glass substrate and the plastic substrate, thus minimizing inter-reflection at the interfaces between the different materials.

The operation of the liquid crystal layer, when a sufficient electric power is supplied to the LCD panel and when it is not, is the same as that of the LCD panel of the transmissive light-reducing apparatus illustrated in **FIGS. 1** and **2****.**

Such a variable light-reducing apparatus may adjust the transmittance or the reflectance at a fast response time of tens of msec. Furthermore, the power of the LCD is consumed to the level of tens of mA or less, and a driving voltage required in the present invention is as low as 10 V or less and thus a portable dry battery may be used as a power source. Because a polarizing film is not used, the apparatus is not damaged even at 100°C or higher temperature range thus obtaining good heat resistance. Also, it is possible to provide a light-reducing apparatus independent of the polarization direction of incident light. In the case where the portable dry battery is used, a primary battery such as an alkaline battery may be used alone or in combination with a solar battery or a secondary battery which is rechargeable.

The vehicle smart mirror using the LCD light-reducing apparatus according to the present invention comprises an incident light sensing unit, an operating determination unit, a power source and driving unit, and the LCD light-reducing apparatus. The incident light sensing unit detects brightness of the front and rear of a vehicle by using an optical sensor, and the operating determination unit operates the power source and driving unit when the brightness of incident light corresponds to the glare conditions of a driver, so that the LCD light-reducing apparatus is operated to thus decrease light reflectance from the mirror of the vehicle.

On the other hand, the operating determination unit determines that power is not supplied to the LCD light-reducing apparatus when the brightness of incident light does not correspond to the glare conditions of a driver. In this case, the nematic liquid crystal molecules are arranged vertical to the plane of the substrate, as illustrated in **FIG. 1****,** so that high light transmittance and reflectance are maintained, thereby satisfying safety standards of vehicle mirrors in which bright conditions should be maintained in the absence of applied electric power.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### Industrial Applicability

According to the present invention, a light-reducing apparatus can be applied to transmittance variable ski goggles, helmet visors or smart windows, or can be applied to reflectance variable vehicle smart mirrors. A vehicle smart mirror according to the present invention can be applied to the exterior side rear view mirror and interior rear view mirrors of vehicles.

## Claims

1. An LCD (Liquid Crystal Display) light-reducing apparatus, comprising:
an LCD panel including at least one liquid crystal cell; and
a power supply unit for applying an electric field to the LCD panel;
wherein said liquid crystal cell includes two substrate layers and a liquid crystal layer located between the two substrates;
wherein the liquid crystal layer is filled with a mixture comprising nematic liquid crystals having negative dielectric anisotropy, a chiral material for inducing a cholesteric phase of the nematic liquid crystals to have a pitch that is 1 to 4 times a cell gap of the liquid crystal layer, and dichroic dyes where the dye is rearranged parallel to the nematic liquid crystals to transmit or absorb light depending on whether a sufficient electrical field is being applied or not;
wherein the substrate layers each comprise a tilted-homeotropic alignment layer for aligning the nematic liquid crystals and the dichroic dye in the first arrangement vertical to a plane of the substrate layer, and an electrode for generating an electric field that passes through the liquid crystal layer to rearrange the nematic liquid crystals and the dichroic dyes in the second arrangement that is different from the first arrangement.

2. The LCD light-reducing apparatus of claim 1, wherein the liquid crystal layer further comprises a spacer which maintains the cell gap of the liquid crystal layer to be constant.

3. The LCD light-reducing apparatus of claim 1, wherein the dichroic dye has a positive dichroism in a visible light wavelength range.

4. The LCD light-reducing apparatus of claim 1, wherein the substrate layers each further comprise a passivation layer for isolating the liquid crystal layer from the impurities of outer layers.

5. The LCD light-reducing apparatus of claim 1, wherein the chiral material has either a cholesteric phase or a nematic phase.

6. The LCD light-reducing apparatus of claim 1, wherein the mixture is vertically aligned as induced nematic phase when a sufficient electric field is not applied, and is rearranged as a cholesteric phase when a sufficient electric field is applied.

7. The LCD light-reducing apparatus of claim 6, wherein a light transmittance of the LCD apparatus at the electric field OFF-state is lower than that of the ON-state.

8. The LCD light-reducing apparatus of claim 1, wherein the mixture comprises 90 ~ 98 weight percentage of the nematic liquid crystals, 1 - 5wt% of the dichroic dyes, and 0.1 ~ 5wt% of the chiral material.

9. The LCD light-reducing apparatus of any one of claims 1 to 8, wherein the electrode is a transparent electrode.

10. The LCD light-reducing apparatus of claim 10, wherein an outermost surface of each of the substrate layers is coated with an anti-reflective layer.

11. The LCD light-reducing apparatus of any one of claims 1 to 8, wherein, of said two substrate layers, the electrode of one substrate layer on which light is incident shows a transparent one, and the electrode of the other substrate layer is an opaque metal film.

12. The LCD light-reducing apparatus of claim 11, wherein said opaque metal film electrode is coated on a surface of the substrate using any one selected from among aluminum, chromium and silver.

13. The LCD light-reducing apparatus of claim 11, wherein an outermost surface of the substrate layer on which light is incident is coated with an anti-reflective layer.

14. The LCD light-reducing apparatus of claim 11, wherein light reflectance of the opaque metal film electrode is in the range of 50 ~ 99%.

15. The LCD light-reducing apparatus of any one of claims 1 to 8, wherein said electrode is a transparent electrode, said substrates of the two substrate layers are made of a transparent material, and a reflective layer is formed on an outer surface of a substrate of either one of the two substrate layers.

16. The LCD light-reducing apparatus of claim 15, wherein the reflective layer comprises a metal film and a passivation film.

17. The LCD light-reducing apparatus of claim 15, wherein an outermost surface of the other of the two substrate layers is coated with an anti-reflective layer.

18. The LCD light-reducing apparatus of claim 11, wherein light reflectance of the reflective layer is in the range of 50 ~ 99%.

19. The LCD light-reducing apparatus of any one of claims 1 to 8, wherein said electrode is a transparent electrode, substrates of the two substrate layers are made of a transparent material, and a substrate coated with a reflective layer is adhered onto an outer surface of either one of the two substrate layers using an adhesive.

20. The LCD light-reducing apparatus of claim 19, wherein an outermost surface of the other of the two substrate layers is coated with an anti-reflective layer.

21. The LCD light-reducing apparatus of claim 19, wherein said adhesive is transparent, and a layer of the adhesive has a refractive index in the range of 1.4 ~ 1.55 in a visible light wavelength range.

22. A vehicle smart mirror, comprising:
an LCD panel including at least one liquid crystal cell;
a power supply unit for applying an electric field to the LCD panel;
an incident light sensing unit for detecting peripheral brightness; and
an operating determination unit for controlling the power supply unit to operate the LCD panel depending on the peripheral brightness detected by the incident light sensing unit;
wherein said liquid crystal cell includes two substrate layers and a liquid crystal layer located between the two substrate layers;
wherein the liquid crystal layer is filled with a mixture comprising nematic liquid crystals having negative dielectric anisotropy, a chiral material for inducing a cholesteric phase of the nematic liquid crystals to have a pitch that is 1 to 4 times a cell gap of the liquid crystal layer, and dichroic dyes where the dye is rearranged parallel to the nematic liquid crystals to transmit or absorb light depending on whether a sufficient electrical field is being applied or not;
wherein the substrate layers each include a tilted-homeotropic alignment layer for aligning the nematic liquid crystals and the dichroic dyes in the first arrangement vertical to the plane of the substrate layer, and an electrode for generating an electric field that passes through the liquid crystal layer to rearrange the nematic liquid crystals and the dichroic dyes in the second arrangement that is different from the first arrangement.

23. The vehicle smart mirror of claim 22, wherein the power supply unit is any one selected from among a power source of a vehicle, a primary battery, a secondary battery, and a solar battery.

24. The vehicle smart mirror of claim 22, wherein the liquid crystal layer further comprises a spacer which maintains the cell gap of the liquid crystal layer to be constant.

25. The vehicle smart mirror of claim 22, wherein the dichroic dye has a positive dichroism in a visible light wavelength range.

26. The vehicle smart mirror of claim 22, wherein the substrate layers each further comprise a passivation layer for isolating the liquid crystal layer from the impurities of outer layers.

27. The vehicle smart mirror of claim 22, wherein the chiral material is in either a cholesteric phase or a nematic phase.

28. The vehicle smart mirror of claim 22, wherein the mixture aligns a vertically induced nematic phase when the sufficient electric field is not applied, and forms a cholesteric phase when the sufficient electric field is applied.

29. The vehicle smart mirror of claim 28, wherein a light transmittance of the LCD apparatus at the electric field OFF-state is lower than that of the ON-state.

30. The vehicle smart mirror of claim 22, wherein the mixture comprises 90 ~ 98 weight percentage of the nematic liquid crystals, 1 - 5wt% of the dichroic dyes, and 0.1 ~ 5wt% of the chiral material.
